# EUROPÄISCHE PATENTSCHRIFT

(11) **EP 0 742 126 B1**
(45) Veröffentlichungstag und Bekanntmachung des Hinweises auf die Patenterteilung: **21.10.1998**
(21) Anmeldenummer: 96105904.5
(22) Anmeldetag: 15.04.1996
(51) Int. Cl.: B60R 22/44, B60R 22/48

(54) **Federangetriebener Aufroller für Sicherheitsgurte bei Kraftfahrzeugen**
Spring-based safety seat belt for vehicles
Enrouleur de ceinture de sécurité rappelée par ressort pour véhicules

(30) Priorität: 10.05.1995 DE 19517123
(43) Veröffentlichungstag der Anmeldung: 13.11.1996
(73) Patentinhaber: TAKATA (EUROPE) VEHICLE SAFETY TECHNOLOGY GmbH, D-89081 Ulm (DE)
(72) Erfinder: Kopetzky, Robert, 89173 Lonsee (DE); Pleyer, Matthias, 89250 Senden (DE)
(74) Vertreter: Manitz, Gerhart, Dr.

(56) Entgegenhaltungen:
- EP-A- 0 581 228

## Beschreibung

Die Erfindung betrifft einen federangetriebenen Aufroller für Sicherheitsgurte bei Kraftfahrzeugen nach dem Oberbegriff des Patentanspruchs 1.

Bei federangetriebenen Gurtaufrollern besteht das Problem, daß mit zunehmendem Auszug des Sicherheitsgurtes die Federspannung zunimmt, so daß die beispielsweise am Anfang nur 2N betragende Rückzugskraft am Sicherheitsgurt bei voll ausgezogenem Gurt bis 18N anwachsen kann. Zu dieser starken Zunahme der Rückzugskraft trägt auch der Umstand bei,daß der Durchmesser der Gurtbandrolle auf der Wickelspindel mit zunehmendem Auszug des Gurtes abnimmt, wodurch zunehmend eine größere Kraft auf den Gurt übertragen wird.

Um diesen Nachteil zu beheben, ist es bereits bekanntgeworden (US-PS 39 97 126; DE-OS 25 53 642; DE-OS 33 13 580; DE-U-75 33 791; EP 0 581 228 A1), zwischen die Gurtaufrollspindel und die durch Drehen einer Wellen zu spannende Spiralfeder ein Getriebe zu schalten, welches aus zwei parallel zueinander angeordneten und seitlich miteinander ausgerichteten Zuggliedrollen besteht, die gegenläufig konisch oder sonstwie verjüngend zulaufen und durch ein auf sie aufgewikkeltes Zugglied, insbesondere Seil, Faden oder Band drehfest verbunden sind. Durch geeignete Ausbildung der Fadenrollen kann somit beim Auszug des Sicherheitsgurtes eine weitgehend konstante Rückzugskraft erzielt werden. Es ist auch möglich, sonstige gewünschte Rückzugskraftverläufe durch geeignete Formgebung der Fadenrollen zu verwirklichen.

Wenn bei einem derartigen Aufroller das Zugglied bricht, entfällt die den Sicherheitsgurt einziehende Kraft, so daß der bis zu einem gewissen Grad ausgezogene Sicherheitsgurt in der ausgezogenen Lage verharrt und somit ein sicherer Halt der angeschnallten Person unter Umständen nicht mehr gewährleistet ist.

Das Ziel der vorliegenden Erfindung besteht somit darin, einen federangetriebenen Aufroller der eingangs genannten Gattung zu schaffen, welcher die sich des Sicherheitsgurtes bedienende Person auch noch bei Zuggliedbruch zumindest in reduziertem Maße sichert.

Zur Lösung dieser Aufgabe sind die Merkmale des kennzeichnenden Teils des Anspruches 1 vorgesehen.

Der Erfindungsgedanke ist also darin zu sehen, daß bei Zuggliedbruch zumindest ein weiteres Ausziehen des Sicherheitsgurtes vermieden wird, vorzugsweise jedoch automatisch Ersatzmaßnahmen eingeleitet werden, um auch in diesem Fall noch ein Einziehen des Sicherheitsgurtes in die gestraffte Lage zu ermöglichen. Der Bruch des Zuggliedes ist zwar äußerst unwahrscheinlich, sollte jedoch, wenn er dennoch einmal auftreten sollte, die Sicherheit der angeschnallten Person nicht oder nur geringfügig beeinträchtigen.

Bevorzugte Ausführungsformen der Erfindung sind durch die Patentansprüche 2 bis 16 gekennzeichnet.

Das Vorsehen von Kupplungs- und Getriebemitteln nach den Ansprüchen 5 bis 7 und 16 ist dabei der sicherste Weg, auf einen Bruch des Zuggliedes zu reagieren.

Eine ebenfalls sichere, aber wesentlich einfachere Maßnahme ist durch Anspruch 8 definiert. Das Vorsehen einer Hilfsfederanordnung an der ersten Zuggliedrolle ist mit geringem Aufwand zu realisieren. Durch geeignete Gestaltung der Verjüngung der Zuggliedrollen kann dabei nicht nur die Federcharakteristik der Hauptfederanordnung, sondern auch die der Hilfsfederanordnung berücksichtigt werden.

Es sind auch bevorzugte Bereiche des Bruchteils der Gesamtgurtwickelkraft angegeben.

Eine noch wesentlich einfachere Maßnahme für die Berücksichtigung des Zuggliedbruches ist durch Anspruch 9 bzw. 10 gekennzeichnet. Hier wird bei Zuggliedbruch lediglich die Gurtauszugssperre in Betrieb gesetzt, so daß ein weiteres Ausziehen des Sicherheitsgurtes unmöglich gemacht wird. Die durch diese Ausführungsform gewährleistete Sicherheit ist allerdings begrenzt, weil ein bereits erreichter Auszugsgrad des Sicherheitsgurtes nicht rückgängig gemacht werden kann.

Beim Ausführungsbeispiel nach Anspruch 11 bzw. 12 wird die Eigenschaft eines eventuell vorhandenen Gurtstraffers, die Gurtrolle in Aufwickelrichtung drehen zu können, ausgenutzt, um im Falle eines Zuggliedbruches den Sicherheitsgurt zumindest um das durch den Gurtstraffer ermöglichte Stück einzuziehen und anschließend zu sperren.

Der Zuggliedbruchdetektor arbeitet bevorzugt nach den Ansprüchen 13 oder 14, wobei die Ausführungsform nach Anspruch 14 deswegen vorteilhaft ist, weil beim Fadenbruch die Hauptfederanordnung die zweite Zuggliedrolle, die nunmehr unbelastet ist, stark beschleunigt, so daß sowohl aus der Beschleunigung als auch aus der schließlich erzielten hohen Drehgeschwindigkeit ein Zuggliedbruchsignal gewonnen werden kann.

Anspruch 15 kennzeichnet ebenfalls eine sehr einfach zu realisierende Maßnahme. Wenn eines der beiden oder mehreren Teilzugglieder bricht, können die verbleibenden dessen Funktion mit übernehmen, sofern sie - wie das erfindungsgemäß vorzunehmen ist - entsprechend etwas überdimensioniert sind.

Beim Ausführungsbeispiel nach Anspruch 16 wird ebenfalls die Tatsache ausgenutzt, daß die Drehgeschwindigkeit der zweiten Zuggliedrolle beim Zuggliedbruch stark anwächst, so daß dies zum Schließen einer Fliehkraftkupplung und der Übertragung der Drehung der zweiten Zuggliedrolle auf die Gurtrolle ausgenutzt werden kann.

Die Erfindung wird im folgenden beispielsweise anhand der Zeichnung beschrieben; in dieser zeigt:
- Fig. 1: eine teilweise geschnittene Ansicht eines erfindungsgemäßen federangetriebenen Aufrollers für einen Sicherheitsgurt, wobei verschiedene Ausführungsformen der erfindungsgemäß bei Zuggliedbruch vorzusehenden Maßnahmen zeichnerisch angedeutet sind,
- Fig. 1a: eine Seitenansicht einer Getriebeanordnung, die statt der in Fig. 1 gestrichelt angedeuteten Riementransmission verwendet werden kann, und
- Fig. 2: eine perspektivische Darstellung nur der beiden konischen Zuggliedrollen mit dem darauf angeordneten Zugglied in einer bevorzugten Ausführungsform.

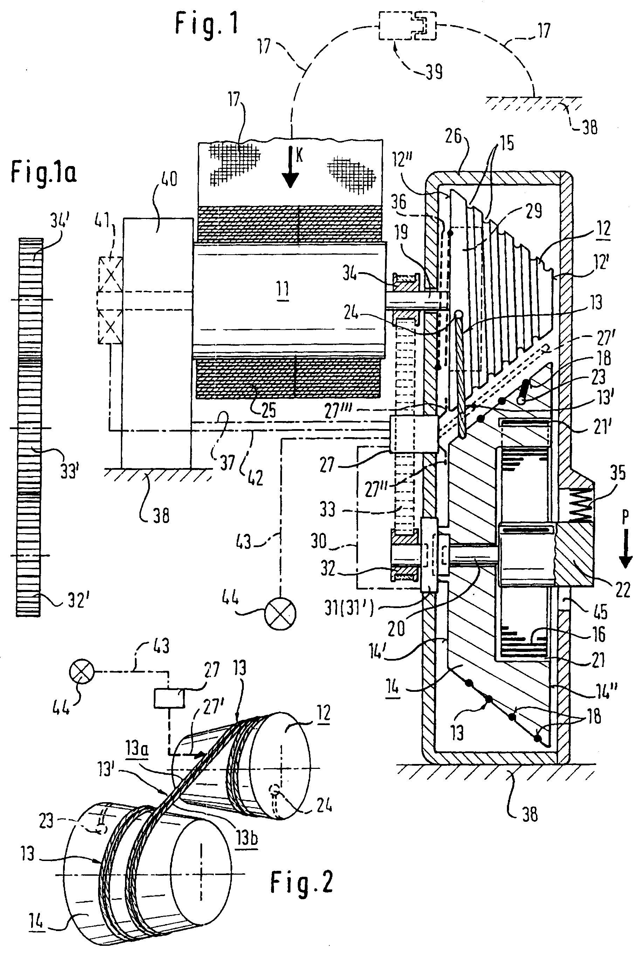

Nach Fig. 1 weist ein erfindungsgemäßer Gurtaufroller eine Gurtrolle 11 auf, auf die ein nur mit einem kurzen Stück angedeuteter Sicherheitsgurt 17 aufwickelbar ist, der in der gestrichelt angedeuteten Weise über ein übliches Gurtschloß 39 um den Körper eines nicht dargestellten Fahrzeuginsassen herum zum Fahrzeugchassis 38 geführt und dort befestigt ist. Die Erfindung ist aber nicht nur bei Zwei-, sondern auch bei Dreipunktgurten anwendbar. Die Gurtrolle 11 ist mittels einer Drehwelle 19 drehbar an einem Gehäuse 26 gelagert, welches seinerseits unten am Fahrzeugchassis 38 befestigt ist. An dem von der Gurtrolle 11 abgewandten Ende der Drehwelle 19 ist innerhalb des Gehäuses 26 eine konisch ausgebildete Fadenrolle 12 mit einer kleinen und einer großen Stirnfläche 12' bzw. 12'' angeordnet, welche auf ihrem Umfang mit einer wendelförmigen Führungsrille 15 versehen ist. Auf der von der Fadenrolle 12 abgewandten Stirnseite der Gurtrolle 11 ist nur rein schematisch eine Gurtauszugs-Sperrvorrichtung 40 angedeutet, welche am Fahrzeugchassis 38 befestigt ist und das weitere Ausziehen des Gurtes 17 bei unfallbedingten Beschleunigungen und/oder einem zu plötzlichen Ausziehen des Sicherheitsgurtes 17 verhindert. Außerdem ist an der in Fig.1 linken Stirnseite der Gurtrolle 11 schematisch ein Gurtstraffer 41 angedeutet, welcher beim Auftreten einer unfallbedingten Beschleunigung am Fahrzeug beispielsweise durch Auslösen einer pyrotechnischen Ladung die Gurtrolle 11 um ein vorbestimmtes Stück von z.B. 5 bis 10 cm aufrollt, um dadurch den Sicherheitsgurt 17 fest an den Körper der angeschnallten Person anzulegen. Aufgrund der Gurtauszugs-Sperrvorrichtung 40 bleibt dieser fest angezogene Zustand des Sicherheitsgurtes 17 bis zur Beendigung der unfallbedingten Beschleunigung erhalten.

Nach Fig. 1 ist neben der Fadenrolle 12 mit zur Drehachse 19 parallele Achse 20 und seitlich ausgerichtet eine weitere, eine kleine und eine große Stirnfläche 14' bzw. 14'' aufweisende Fadenrolle 14 vorgesehen, welche gegenläufig zu der ersten Fadenrolle 12 konisch verläuft und deren kleinerer Durchmesser gleich dem größeren Durchmesser der ersten Fadenrolle 12 ist. Die in Fig. 1 linke große Stirnfläche 12'' und rechte kleine Stirnfläche 12' der kleinen Fadenrolle 12 liegt im wesentlichen in einer Ebene mit der linken kleinen Stirnfläche 14' und rechten großen Stirnfläche 14'' der großen Fadenrolle 14. Auch die zweite Fadenrolle 14 weist auf ihrem Umfang eine wendelförmige Führungsrille 18 auf.

Sie sitzt drehbar auf einer gehäusefesten Welle 20, die parallel und im seitlichen Abstand zur Welle 19 am Gehäuse 26 befestigt ist.

Die zweite Fadenrolle 14 weist gemäß Fig. 1 auf der Seite ihrer großen Stirnfläche einen koaxialen Hohlraum 21 auf, in welchem eine Spiralfederanordnung 16 vorgesehen ist, die einerseits an einem die Welle 20 tragenden gehäusefesten Zapfen 22 und andererseits bei 21' an der Umfangswand des Hohlraumes 21 befestigt ist. Die Spiralfederanordnung 16 überträgt auf die Fadenrolle 14 ein Drehmoment, welche einen in ihre Führungsrille 18 eingelegten und gemäß Fig. 1 und 2 bei 23 befestigte Faden 13 aufzuwickeln sucht. Der Faden 13 erstreckt sich nach den Fig. 1 und 2 als geradliniges Stück 13' vom engsten Teil der Fadenrolle 14 zu einem damit ausgerichteten Teil der Führungsrille 15 der ersten Fadenrolle 12, wo der Faden 13 bei 24 an der Fadenrolle 12 befestigt ist.

In der aus Fig. 1 ersichtlichen Wickelposition ist der Faden 13 weitgehend vollständig auf die Fadenrolle 14 aufgewickelt und von der ersten Fadenrolle 12 abgewickelt. In diesem Zustand weist der Gurtwickel 25 auf der Gurtrolle 11 den größten Durchmesser auf, d.h., daß nunmehr eine maximale Gurtlänge auf der Gurtrolle 11 aufgewickelt ist und der Gurt 17 am weitesten eingezogen ist.

Wird nun der Gurt 17 entgegen der Rückzugskraft K in Fig.1 langsam ausgezogen, so dreht sich die erste Fadenrolle 12 in einem solchen Drehsinn, daß der Faden 14 sukzessive auf die erste Fadenrolle 12 aufgewickelt und von der zweiten Fadenrolle 14 abgewickelt wird, wobei er sich zunehmend in die Führungsrille 15 einlegt und aus der Führungsrille 18 entfernt. Dabei wird die Hauptfederanordnung 16 zunehmend gespannt. Bei geeigneter Form der Erzeugenden der Zuggliedrollen 12, 14 kann das bei Spannung der Spiralfeder 16 zunehmende Drehmoment auf die zweite Fadenrolle 14 an der Gurtrolle 11 kompensiert werden, indem sich durch Aufwickeln des Fadens 13 auf die Fadenrolle 12 und Abwickeln von der Fadenrolle 14 das Übersetzungsverhältnis zwischen der Spiralfederanordnung 16 und der Gurtrolle 11 gerade so ändert, daß am Sicherheitsgurt 17 entweder eine konstante oder in gewünschter Weise abgestufte Rückzugskraft zur Verfügung steht.

Bei schnellem Ausziehen des Sicherheitsgurtes 17 rastet in üblicher Weise die Auszugssperre 40 ein.

Um auch bei Bruch des Fadens 13 die angeschnallte Person noch zu sichern, sind nach Fig. 1 verschiedene Maßnahmen wie folgt möglich:

Am Gehäuse 26 kann ein Fadenbruchdetektor 27 vorgesehen sein, der entweder mittels eines nur gestrichelt angedeuteten mechanischen Fadenfühlers 27' unmittelbar das Vorhandensein bzw. die Spannung des sich zwischen den Fadenrollen 12, 14 erstreckenden geradlinigen Fadenstücks 13' ermittelt oder aber auch mit Geschwindigkeitsfühlern 27'',27''' ausgestattet sein kann, die nahe dem Außenumfang der kleinen Stirnfläche 14' der zweiten Fadenrolle 14 bzw. der großen Stirnfläche 12'' der ersten Fadenrolle 12 angeordnet sind und auf mechanischem, elektrischem, magnetischem oder optischem Wege die Feststellung der momentanen Geschwindigkeit der zweiten Fadenrolle 14 relativ zur ersten Fadenrolle 12 gestattet.

Im einfachsten Fall ist der Fadenbruchdetektor 27 über eine Steuerleitung 37 mit der Gurtauszugssperrvorrichtung 40 verbunden. Hierdurch kann der Fadenbruchdetektor 27 bei Feststellung eines Bruches des Fadens 13 die Gurtauszugs-Sperrvorrichtung 40 auslösen und auf diese Weise ein weiteres Ausziehen des Sicherheitsgurtes 17 verhindern. Dies bedeutet zwar, daß eine unter Umständen im Sicherheitsgurt 17 vorhandene Lose beibehalten wird; auf jeden Fall wird aber ein stärkeres Schlaffwerden des Sicherheitsgurtes 17 durch weiteres Ausziehen sicher vermieden.

Eine andere Möglichkeit, ein weiteres Ausziehen des Sicherheitsgurtes 17 im Falle eines Fadenbruches zu vermeiden und sogar noch eine gewisse Straffung herbeizuführen, besteht darin, daß der Fadenbruchdetektor 27 über eine Steuerleitung 42 mit dem Gurtstraffer 41 in der Weise verbunden wird, daß bei Feststellung eines Fadenbruches durch den Fadenbruchdetektor 27 der Gurtstraffer wie bei einem Unfall ausgelöst wird und so den Gurt um ein bestimmtes Stück strafft, wobei anschließend die Gurtauszugs-Sperrvorrichtung 40 wirksam wird und den betreffenden Einzugszustand des Sicherheitsgurtes 17 fixiert.

Bei allen Ausführungsbeispielen sollte der Fadenbruchdetektor 27 auch über eine Leitung 43 mit einer beispielsweise am Armaturenbrett des Fahrzeuges angebrachten Warnlampe 44 oder einem akustischen Signalgeber verbunden sein, so daß durch Aufleuchten der Warnlampe 44 oder Ertönen des akustischen Warnsignals beim Auftreten eines Fadenbruches der Fahrer des Fahrzeuges gewarnt und zum Aufsuchen einer Werkstatt veranlaßt wird, die den schadhaften Gurtaufroller auswechseln muß.

Eine weitere Möglichkeit, das Einziehen des Sicherheitsgurtes 17 auch noch bei Bruch des Fadens 13 zu ermöglichen, besteht darin, zwischen der ersten Fadenrolle 12 und dem Gehäuse 26 eine in Fig. 1 gestrichelt angedeutete Hilfsfederanordnung 36 vorzusehen, welche auf die erste Fadenrolle 12 ein dauerndes Drehmoment in Richtung der Aufwicklung des Sicherheitsgurtes 17 auf die Gurtrolle 11 ausübt. Dieses Drehmoment ergänzt das normalerweise von der Hauptfederanordnung 16 über die Fadenrolle 14 und den Faden 13 auf die erste Fadenrolle 12 ausgeübte Drehmoment. Demnach ist die Hauptfederanordnung 16 entsprechend schwächer auszubilden.

Die Hilfsfederanordnung 36 soll nur etwa 30%, die Hauptfederanordnung 16 etwa 70% des für die Beaufschlagung der Gurtrolle 11 erforderlichen Drehmomentes zur Verfügung stellen.

Durch geeignete Formung der Erzeugenden der Fadenrollen 12, 14 kann sowohl die Federcharakteristik der Hauptfederanordnung 16 als auch der Hilfsfederanordnung 36 berücksichtigt werden.

Auch die Hilfsfederanordnung 36 kann eine Spiralfeder sein, die bevorzugt in einem nur gestrichelt angedeuteten Hohlraum 29 der Fadenrolle 12 angeordnet ist, und zwar in ähnlicher Weise wie die Hauptfederanordnung 16 im Hohlraum 21 der zweiten Fadenrolle 14 untergebracht ist.

Eine etwas aufwendigere, dafür aber besonders wirksame Ausführungsform sieht vor, daß die Drehung der zweiten Fadenrolle 14 auf eine am Gehäuse 26 angeordnete Kupplung 31 übertragen wird, die im normalen Betrieb geöffnet ist, jedoch vom Fadenbruchdetektor 27 über eine Steuerleitung 30 eingerückt werden kann, wenn ein Fadenbruch festgestellt wird. Dann überträgt die Fadenrolle 14 ihre Drehbewegung über die nunmehr eingerückte Kupplung 31 auf eine auf ihrer Abtriebsseite vorgesehene Riemenrolle 32, die über einen Treibriemen 33 mit einer weiteren Riemenrolle 34 verbunden ist, die auf der Drehwelle 19 der Gurtrolle 11 bzw. der Fadenrolle 12 drehfest angeordnet ist. Statt über den gebrochenen Faden 13 wird nunmehr die Drehbewegung der zweiten Fadenrolle 14 über die Kupplung 31, die Riemenrolle 32, den Triebriemen 33 und die Riemenrolle 34 auf die Drehwelle 19 und damit die Gurtrolle 11 übertragen. Aufgrund des konstanten Übersetzungsverhältnisses des durch die Riemenrolle 32, den Treibriemen 33 und die Riemenrolle 34 gebildeten Übertragungsgetriebes nimmt zwar mit zunehmendem Auszug des Sicherheitsgurtes 17 die Rückzugskraft K entsprechend der zunehmenden Rückstellkraft der Federanordnung 16 zu, so daß der durch die sich verjüngenden Fadenrollen 12, 14 gewährleistete Komforteffekt nicht mehr erzielt wird. Auf jeden Fall ist aber noch die volle Sicherheit der angeschnallten Person gewährleistet, weil der Sicherheitsgurt 17 sich nach dem Anlegen ausreichend strafft.

Es ist zu betonen, daß der Antrieb der Gurtrolle 11 über die Kupplung 31, die Riemenrollen 32, 34 und den Treibriemen 33 nur eine Notmaßnahme darstellt und daß durch Aufleuchten der Warnlampe 44 bei Fadenbruch der Fahrer veranlaßt wird, den gesamten defekten Gurtaufroller gegen einen einwandfreien zu ersetzen.

Wenn die Kupplung 31 nach Fig. 1 nach einer weiteren Ausführungsform der Erfindung durch eine Fliehkraftkupplung 31' ersetzt wird, kann sich das Vorsehen eines besonderen Fadenbruchdetektors 27 erübrigen, denn bei Fadenbruch nimmt die Drehgeschwindigkeit der zweiten Fadenrolle 14 stark zu, so daß die Fliehkraftkupplung 31' einrückt und nunmehr die Drehbewegung der Fadenrolle 14 über die Riemenrollen 32, 34 und den Treibriemen 33 auf die Gurtrolle 11 übertragen kann.

Um auch in diesem Fall den Fahrer zu warnen, kann die Fliehkraftkupplung 31' über eine in Fig. 1 nicht dargestellte Steuerleitung mit der Warnlampe 44 verbunden sein und diese bei Einrücken zum Aufleuchten bringen.

Auf den Fadenbruchdetektor 27 kann auch verzichtet werden, wenn nach einer weiteren in Fig. 1 angedeuteten Ausführungsform der Lagerzapfen 22 für die zweite Fadenrolle 14 in Richtung des Pfeiles P geführt verschiebbar am Gehäuse 26 gelagert ist, wobei eine Druckfeder 35 den Lagerzapfen 22 in Richtung des Pfeiles P vorspannt. Die Bewegung des Lagerzapfens 22 in Richtung des Pfeiles P wird normalerweise durch den intakten Faden 13 begrenzt.

Bricht der Faden 13, so fehlt die den Lagerzapfen 22 in der Position nach Fig. 1 haltende Kraft, so daß die Feder 35 den Lagerzapfen 22 nunmehr in Richtung des Pfeiles P um ein Stück verschieben kann, wozu ein entsprechender Spielraum 45 im Gehäuse 26 vorgesehen ist.

Bei dem vorstehend beschriebenen Ausführungsbeispiel ist weiter die zweite Fadenrolle 14 unter Verzicht auf die Kupplung 31 drehfest mit der Riemenrolle 32 verbunden, und der Treibriemen 33 liegt in der Normalposition bei einwandfreiem Faden 13 so lose auf den Riemenrollen 32, 34 auf, daß beim Drehen der Fadenrolle 14 die Drehantriebskräfte ausschließlich durch den Faden 13 und nicht über die Riemenrollen 32, 34 und den Treibriemen 33 auf die Gurtrolle 11 übertragen werden.

Reißt jedoch der Faden 13 und verschiebt sich der Lagerzapfen 22 unter der Einwirkung der Feder 35 in Richtung des Pfeiles P in den Spielraum 45, wird aufgrund einer entsprechend in Richtung des Pfeiles P verschiebbaren Lagerung der Riemenrolle 32 der Treibriemen 33 gespannt und die Antriebskraft der Fadenrolle 14 nunmehr über den Treibriemen 33 auf die Gurtrolle 11 übertragen wird.

Bei Vorhandensein der Kupplung 31 bzw. der Fliehkraftkupplung 31' kann das durch die Riemenrollen 32, 34 und den Treibriemen 33 gebildete Übersetzungsgetriebe auch durch ein in Fig. 1a angedeutetes Zahnradgetriebe bestehend aus Zahnrädern 32', 33', 34' ersetzt werden, wobei das Zahnrad 32' koaxial zur Fadenrolle 14 angeordnet und drehfest mit ihr verbunden ist, während das Zahnrad 33' am Gehäuse 26 frei drehbar gelagert ist. Das Zahnrad 34' wiederum ist drehfest auf der Drehwelle 19 angeordnet. Beim Einrücken der Kupplung 31 bzw. 31' wird das Zahnrad 32' drehfest mit der Fadenrolle 14 verbunden und erzeugt somit über das freilaufende Zahnrad 33' eine gleichlaufende Drehbewegung am Zahnrad 34' und damit der Gurtrolle 11.

Eine weitere besonders einfache Alternative für die Aufrechterhaltung der Funktion bei Fadenbruch entnimmt man Fig.2, wo das Zugglied 13 durch zwei Teilzugglieder 13a, 13b realisiert ist, die parallel zueinander auf den Fadenrollen 12, 14 angeordnet sind. Bricht eines der Teilzugglieder 13a, 13b, steht noch das andere für die Aufrechterhaltung der Funktion des Aufrollers zur Verfügung.

Bei dieser Ausführungsform sollte ein Fadenbruchdetektor 27' vorgesehen sein, der das Brechen eines der Teilfäden 13a, 13b feststellt und ein entsprechendes Warnsignal über die Steuerleitung 43 an die Warnlampe 44 oder eine akustische Alarmvorrichtung liefern kann.

Der erfindungsgemäße Gurtaufroller eignet sich demnach für die Ausführung einer Fülle von Maßnahmen, um bei Fadenbruch zumindest noch eine eingeschränkte Funktion der Sicherheitsgurtanordnung zu gewährleisten.

## Patentansprüche

1. Federangetriebener Aufroller für Sicherheitsgurte (17) bei Kraftfahrzeugen mit einer Gurtrolle (11), die durch eine bei unfallbedingten Beschleunigungen und/oder bei versuchtem schnellen Auszug des Sicherheitsgurtes (17) auslösbare Auszugssperre (40) gegen Drehung in Auszugsrichtung sperrbar ist und drehfest, mit einer ersten, sich in einer Axialrichtung verjüngenden Zuggliedrolle (12) mit einer wendelförmigen Führungsrille (15) auf ihrem Umfang verbunden ist, welche über ein entgegen dem Wickelsinn des Sicherheitsgurtes (17) auf der Gurtrolle (11) in die Führungsrille (15) gewickeltes, mit einem Ende an der Zuggliedrolle (12) befestigtes flexibles Zugglied (13) drehfest mit einer weiteren parallel und in seitlicher Ausrichtung zu ihr angeordneten, zweiten sich in entgegengesetzter Axialrichtung verjüngenden Zuggliedrolle (14) mit einer wendelförmigen Führungsrille (18) verbunden ist, an der das andere Ende des Zuggliedes (13) befestigt und in deren Führungsrille (18) das Zugglied (13) aufgewickelt ist und die durch eine Federanordnung (16), vorzugsweise eine Spiralfederanordnung, in Aufwickelrichtung des Zuggliedes (13) auf der zweiten Zuggliedrolle (14) und des Sicherheitsgurtes (17) auf der Gurtolle (11) vorgespannt ist, wobei die beiden Führungsrillen (15, 18) derart ausgebildet und auf den Zuggliedrollen (12, 14) angeordnet sind, daß das die beiden Zuggliedrollen (12, 14) verbindende gespannte Zuggliedstück (13') zumindest im wesentlichen knickfrei in beide auf den Zuggliedrollen (12,14) befindlichen Zuggliedwindungen übergeht,
dadurch gekennzeichnet,
daß bei Zuggliedbruch wirksame Mittel (13a, 13b; 27, 29, 30, 31, 32, 32', 33, 33', 34; 34', 35; 36; 37, 40; 41, 42) vorgesehen sind, die beim Bruch des Zuggliedes (13) zumindest ein weiteres Abwickeln des Sicherheitsgurtes von der Gurtrolle (11) verhindern.

2. Aufroller nach Anspruch 1,
dadurch gekennzeichnet,
daß die Gurtrolle (11) koaxial und direkt mit der ersten Zuggliedrolle (12) verbunden ist.

3. Aufroller nach Anspruch 1 oder 2,
dadurch gekennzeichnet,
daß das Zugglied ein Faden (13) und die Zuggliedrollen Fadenrollen (12, 14) sind.

4. Aufroller nach einem der vorhergehenden Ansprüche,
dadurch gekennzeichnet,
daß die bei Zuggliedbruch wirksamen Mittel (13a, 13b; 27, 29, 30, 31, 32, 32', 33, 33', 34; 34', 35; 36; 37, 40; 41, 42) dafür sorgen, daß an der Gurtrolle (11) weiter ein Drehmoment zum Aufwickeln des Sicherheitsgurtes (17) zur Verfügung steht.

5. Aufroller nach einem der vorhergehenden Ansprüche,
dadurch gekennzeichnet,
daß das bei Zuggliedbruch wirksame Mittel einen Zuggliedbruchdetektor (27), Getriebemittel (32, 33, 34; 32', 33', 34') und vom Zuggliedbruchdetektor (27) einrückbare, normalerweise ausgerückte Kupplungsmittel aufweist, die bei Feststellung eines Zuggliedbruches die zweite Zuggliedrolle (14) mit der ersten Zuggliedrolle (12) oder der Gurtrolle (11) getriebemäßig so kuppeln, daß die erste Zuggliedrolle (12) durch die von der Federanordnung (16) angetriebene zweite Zuggliedrolle (14) in Gurtaufwickelrichtung drehangetrieben wird.

6. Aufroller nach Anspruch 5,
dadurch gekennzeichnet,
daß der Zuggliedbruchdetektor (27) über eine Steuerleitung (30) mit einer steuerbaren Kupplung (31) verbunden ist, die zwischen die zweite Zuggliedrolle (14) und die Getriebemittel (32, 33, 34; 32', 33', 34') geschaltet ist und normalerweise ausgerückt ist sowie bei Zuggliedbruch durch den Zuggliedbruchdetektor (27) eingerückt wird, und/oder die Getriebemittel als Riementransmission (32, 33, 34) oder Zahnradgetriebe (32', 33', 34') ausgebildet sind.

7. Aufroller nach Anspruch 5 oder 6,
dadurch gekennzeichnet,
daß die zweite Zuggliedrolle (14) relativ zur ersten Zuggliedrolle (12) aus einer Position, wo das Zugglied (13) gespannt ist, in eine Position, wo die Getriebemittel (32, 33, 34, 32', 33', 34') die erste Zuggliedrolle (12) und die zweite Zuggliedrolle (14) kuppeln, in Zugglied-Spannrichtung verschiebbar ist, wobei insbesondere die verschiebbare zweite Zuggliedrolle (14) durch Federmittel (35) in Zuggliedspannrichtung vorgespannt ist.

8. Aufroller nach einem der Ansprüche 1 bis 4,
dadurch gekennzeichnet,
daß an der ersten Zuggliedrolle (12) eine Hilfsfederanordnung (36) in Gurtaufwickelrichtung angreift, die nur einen Bruchteil der von der Federanordnung (16) und der Hilfsfederanordnung (36) gemeinsam zur Verfügung gestellten Wickelkraft bereitstellt, wobei vorzugsweise die Konizität und die Steigung der Führungsrillen (15, 18) der ersten und zweiten Führungsrolle (12, 14) so gewählt sind, daß unter Berücksichtigung der Federcharakteristik der Hilfsfederanordnung (36) die gewünschte konstante bzw. bewußt abgestufte Gesamtwickel-Federkraftcharakteristik erzielt wird, und/oder die Hilfsfederanordnung (36) 5 bis 40%, insbesondere etwa 30% der Gesamtwickelkraft zur Verfügung stellt.

9. Aufroller nach einem der Ansprüche 1 bis 4,
dadurch gekennzeichnet,
daß bei Zuggliedbruch die Gurtauszugssperre (40) eingerückt wird.

10. Aufroller nach Anspruch 9,
dadurch gekennzeichnet,
daß ein Zuggliedbruchdetektor (27) über eine Steuerleitung (37) mit der Gurtauszugssperre (40) verbunden ist, um diese bei Zuggliedbruch auszulösen.

11. Aufroller nach einem der Ansprüche 1 bis 4 und insbesondere Anspruch 9 oder 10,
dadurch gekennzeichnet,
daß an der Gurtrolle (11) ein Gurtstraffer (41) angeordnet ist, welcher bei einer unfallbedingten Fahrzeugbeschleunigung die Gurtrolle (11) schlagartig wenigstens um ein zur Gurtstraffung erforderliches Stück einrollt, und daß bei Zuggliedbruch der Gurtstraffer (41) ausgelöst wird.

12. Aufroller nach Anspruch 11,
dadurch gekennzeichnet,
daß ein Zuggliedbruchdetektor (27) über eine Steuerleitung (42) mit dem Gurtstraffer (41) verbunden ist, um diesen bei Zuggliedbruch auszulösen.

13. Aufroller nach einem der Ansprüche 5 bis 12,
dadurch gekennzeichnet,
daß der Zuggliedbruchdetektor (27) unmittelbar auf das Vorhandensein oder die Spannung des Zuggliedes (13) anspricht, wobei bevorzugt der Zuggliedbruchdetektor (27) einen Zuggliedfühler (27') aufweist.

14. Aufroller nach einem der Ansprüche 5 bis 10,
dadurch gekennzeichnet,
daß der Zuggliedbruchdetektor (27) auf die Drehgeschwindigkeit der zweiten Zuggliedrolle (14) relativ zur ersten Zuggliedrolle (12) anspricht.

15. Aufroller nach einem der Ansprüche 1 bis 4,
dadurch gekennzeichnet,
daß das Zugglied in mindestens zwei parallel zueinander verlaufende Teilzugglieder (13a, 13b) unterteilt ist.

16. Aufroller nach Anspruch 5 oder 6,
dadurch gekennzeichnet,
daß der Zuggliedbruchdetektor (27) durch eine Fliehkraftkupplung (31') gebildet ist, die mit der zweiten Zuggliedrolle (14) in Drehverbindung steht und bei Feststellung eines Zuggliedbruches durch plötzlich zunehmende Drehgeschwindigkeit der zweiten Zuggliedrolle (14) die zweite Zuggliedrolle (14) mit der ersten Zuggliedrolle (12) oder der Gurtrolle (11) getriebemäßig so kuppelt, daß die erste Zuggliedrolle (12) bzw. die Gurtrolle (11) durch die von der Federanordnung (16) angetriebene zweite Zuggliedrolle (14) in Gurtaufwickelrichtung drehangetrieben wird.

## Claims

1. Spring-driven reeler for safety belts (17) in motor vehicles comprising a belt reel (11) which is blockable against rotation in a draw-out direction by a releasable draw-out blocking device (40) triggerable by accident-dependent accelerations, and/or by an attempted rapid draw-out of the safety belt (17), the belt reel being rotationally fixedly connected to a first draw member reel (12) which tapers in an axial direction and has a helically shaped guide groove (15) on its periphery, said first draw member reel being rotationally fixedly connected to a further, second draw member reel via a flexible draw member (13) secured at one end to the first draw member reel (12) and wound, contrary to the winding sense of the safety belt (17) on the belt reel (11), into the guide groove (15), the second draw member reel (14) tapering in the opposite axial direction to the first draw member reel and being disposed parallel to it and in lateral alignment with it, the said second draw member reel having a helical guide groove (18) to which the other end of said draw member (13) is secured, with the draw member (13) being wound into the guide groove (18) of the second draw member reel (14) and the second draw member reel (14) being biased in the winding-up direction of the draw member (13) onto the second draw member reel (14) and of the safety belt (17) onto the belt reel (11) by a spring arrangement (16), preferably a spiral spring arrangement, with the two guide grooves (15, 18) being so designed and arranged on the draw member reels (12, 14) that the tensioned draw member piece (13') connecting the two draw member reels (12, 14) merges in a substantially kink-free manner into two draw member turns located on the draw member reels (12, 14), characterised in that means (13a, 13b; 27, 29, 30, 31, 32, 32', 33, 33', 34; 34', 35; 36; 37, 40; 41, 42) active on fracture of the draw member are provided which, on fracture of the draw member (13), at least prevent a further unwinding of the safety belt from the belt reel (11).

2. Reeler in accordance with claim 1, characterized in that the belt reel (11) is coaxially and directly connected to the first draw member reel (12).

3. Reeler in accordance with claim 1 or claim 2, characterized in that the draw member is a thread (13) and the draw member reels are thread reels (12, 14).

4. Reeler in accordance with any one of the preceding claims, characterized in that the means (13a, 13b; 27, 29, 30, 31, 32, 32', 33, 33', 34; 34', 35; 36; 37, 40; 41, 42) active on fracture of the draw member ensure that a torque for the winding up of the safety belt (17) is still available at the belt reel.

5. Reeler in accordance with one of the preceding claims, characterised in that the means active on breakage of the draw member have a draw member break detector (27), transmission means (32, 33, 34; 32', 33', 34') and coupling means which are normally disengaged, but engagable by the draw member break detector (27) which, on detection of the draw member breakage, so couple the second draw member reel (14) to the first draw member reel (12) or to the belt reel (11) transmission-wise that the first draw member reel (12) is rotationally driven in the belt winding direction by the second draw member reel (14) driven by the spring arrangement (16).

6. Reeler in accordance with claim 5, characterised in that the draw member break detector (27) is connected via a control line (30) to a controllable clutch (31) which is inserted between the second draw member reel (14) and the transmission means (32, 33, 34; 32', 33', 34') and is normally disengaged and is also engaged on thread member breakage by the thread member break detector (27) and/or in that the transmission means is designed as a belt transmission (32, 33, 34) or as a gear transmission (32', 33', 34').

7. Reeler in accordance with claim 5 or claim 6, characterised in that the second draw member reel (14) is displaceable relative to the first draw member reel (12) in the draw member tensioning direction from a position where the draw member (13) is tensioned into a position where the transmission means (32, 33, 34, 32', 33', 34') couples the first draw member reel (12) and the second draw member reel (14), with the displaceable second draw member reel (14) in particular being biased by spring means (35) in the draw member tensioning direction.

8. Reeler in accordance with one of the claims 1 to 4, characterised in that an auxiliary spring arrangement (36) acts on the first draw member reel (12) in the belt winding-up direction and only makes a available a fraction of the winding force jointly made available by the spring arrangement (16) and by the auxiliary spring arrangement (36), with the conicity and the pitch of the guide groove (15, 18) of the first and second guide reels (12, 14) being so selected that, taking account of the spring characteristic of the auxiliary spring arrangement (36), the desired constant or consciously graduated total winding spring force characteristic is achieved, and/or in that the auxiliary spring arrangement (36) makes available 5 to 40 %, in particular approximately 30 % of the total winding force.

9. Reeler in accordance with one of the claims 1 to 4, characterised in that when the draw member breaks the belt draw-out blocking device (40) is engaged.

10. Reeler in accordance with claim 9, characterised in that a draw member break detector (27) is connected via a control line (37) to the belt draw-out blocking device (40) in order to trigger the latter on breakage of the draw member.

11. Reeler in accordance with one of the claims 1 to 4, and in particular claims 9 or 10, characterized in that a belt tensioner (41) arranged at the belt reel (11) which, in the event of an accident-dependent vehicle acceleration, abruptly rolls in the belt reel (11) at least by an amount necessary for belt tensioning, and in that the belt tensioner (41) is initiated on draw member breakage.

12. Reeler in accordance with claim 11, characterised in that a draw member break detector (27) is connected via a control line (42) to the belt tensioner (41) in order to trigger the latter on draw member breakage.

13. Reeler in accordance with one of the claims 5 to 12, characterised in that the draw member break detector (27) responds directly to the presence or to the tension of the draw member (13), with the draw member break detector (27) preferably having a draw member sensor (27').

14. Reeler in accordance with one of the claims 5 to 10, characterised in that the draw member break detector (27) responds to the rotational speed of the second draw member reel (14) relative to the first draw member reel (12).

15. Reeler in accordance with claim 1, characterised in that the draw member is subdivided into at least two partial draw members (13a, 13b) extending parallel to one another.

16. Reeler in accordance with claim 5 or claim 6, characterised in that the draw member break detector (27) is formed by a centrifugal clutch (31') which stands in rotary connection with the second draw member reel (14) and, on detecting a draw member breakage through a suddenly increasing rotational speed of the second draw member reel (14), so couples the second draw member reel (14) with the first draw member reel (12), i.e. with the belt reel (11), transmission-wise that the first draw member reel (12), i.e. the belt reel (11) is rotationally driven in the belt reeling-up direction by the second draw member reel (14) driven by the spring arrangement (16).

## Revendications

1. Enrouleur à entraînement par ressort destiné à des ceintures de sécurité (17) pour véhicules automobiles, comprenant un galet à ceinture (11), lequel est susceptible d'être verrouillé à l'encontre d'une rotation dans la direction de déroulement au moyen d'un verrouillage de déroulement (40) en cas d'accélération provoquée par un accident et/ou en cas de tentative de déroulement rapide de la ceinture de sécurité (17) et relié solidairement en rotation à un premier galet d'organe de traction (12) qui va en se rétrécissant en direction axiale et est pourvu d'une rainure de guidage en hélice (15) sur sa périphérie, ledit galet étant relié solidairement en rotation à un second gaiet d'organe de traction (14) qui va en se rétrécissant en direction axiale opposée et est pourvu d'une rainure de guidage en hélice (18), ce second galet étant agencé parallèlement et en alignement latéral vis-à-vis du premier, par l'intermédiaire d'un organe de traction (13) flexible enroulé dans la rainure de guidage (15) sur le galet à ceinture (11) dans le sens opposé au sens de l'enroulement de la ceinture de sécurité (17), et fixé par une extrémité au premier galet d'organe de traction (12), l'autre extrémité de l'organe de traction (13) étant fixée au second galet (14), et l'organe de traction (13) étant enroulé dans la rainure de guidage (18) de celui-ci, et précontraint par un agencement à ressort (16), de préférence un agencement à ressort en spirale, dans la direction d'enroulement de l'organe de traction (13) sur le second galet d'organe de traction (14) et de la ceinture de sécurité (17) sur le galet à ceinture (11), les deux rainures de guidage (15, 18) étant réalisées et agencées de telle façon sur les galets d'organe de traction (12, 14), que le morceau (13') d'organe de traction tendu qui relie les deux galets d'organe de traction (12, 14) passe sensiblement sans coudage dans les deux spires d'organe de traction situées sur les deux galets d'organe de traction (12, 14),
caractérisé en ce que
il est prévu des moyens (13a, 13b ; 27, 29, 30, 31, 32', 33, 33', 34; 34', 35 ; 36; 37, 40; 41, 42) actifs en cas de rupture de l'organe de traction, lesquels empêchent en cas de rupture de l'organe de traction (13) au moins une poursuite du déroulement de la ceinture de sécurité depuis le galet à ceinture (11).

2. Enrouleur selon la revendication 1, caractérisé en ce que le galet à ceinture (11) est relié coaxialement et directement au premier galet d'organe de traction (12).

3. Enrouleur selon l'une ou l'autre des revendications 1 et 2, caractérisé en ce que l'organe de traction est un fil (13), et les galets d'organe de traction sont des galets à fil (12, 14).

4. Enrouleur selon l'une des revendications précédentes, caractérisé en ce que les moyens (13a, 13b ; 27, 29, 30, 31, 32', 33, 33', 34 ; 34', 35 ; 36 ; 37, 40 ; 41, 42) actifs en cas de rupture de l'organe de traction ont pour effet qu'il existe encore un couple de rotation au niveau du galet à ceinture (11) pour l'enroulement de la ceinture de sécurité (17).

5. Enrouleur selon l'une des revendications précédentes, caractérisé en ce que les moyens actifs en cas de rupture de l'organe de traction comprennent un détecteur de rupture (27) pour l'organe de traction, des organes de transmission (32, 33, 34 ; 32', 33', 34'), et des organes d'accouplement normalement découplés et susceptible d'être accouplés par le détecteur de rupture (27), qui, dans le cas d'une détermination d'une rupture de l'organe de traction, accouplent en mode de transmission le second galet d'organe de traction (14) avec le premier galet d'organe de traction (12) ou avec le galet à ceinture (11), de telle manière que le premier galet d'organe de traction (12) est entraîné en rotation dans la direction d'enroulement de la ceinture par le second galet d'organe de traction (14) entraîné par l'agencement à ressort (16).

6. Enrouleur selon la revendication 5, caractérisé en ce que le détecteur de rupture (27) pour l'organe de traction est relié via une ligne de commande (30) à un accouplement commandé (31), qui est branché entre le second galet d'organe de traction (14) et les organes de transmission (32, 33, 34 ; 32', 33', 34') et normalement découplé, et qui est accouplé par le détecteur de rupture (27) en cas de rupture de l'organe de traction, et/ou en ce que les organes de transmission sont réalisés sous la forme d'une transmission à courroie (32, 33, 34), ou d'une transmission à engrenages (32', 33', 34').

7. Enrouleur selon l'une ou l'autre des revendications 5 et 6, caractérisé en ce que le second galet d'organe de traction (14) est susceptible d'être déplacé dans la direction de tensionnement de l'organe de traction, par rapport au premier galet d'organe de traction (12), depuis une position dans laquelle l'organe de traction (13) est tendu, jusque dans une position dans laquelle les organes de transmission (32, 33, 34 ; 32', 33', 31') accouplent le premier galet organe de traction (12) et le second galet d'organe de traction (14), le second galet d'organe de traction mobile (14) étant en particulier précontraint par des organes à ressort (35) dans la direction de tensionnement de l'organe de traction.

8. Enrouleur selon l'une des revendications 1 à 4, caractérisé en ce que le premier galet d'organe de traction (12) est attaque par un agencement à ressort auxiliaire (36) dans la direction de l'enroulement de la ceinture, qui n'assure qu'une fraction de la force d'enroulement assurée conjointement par l'agencement à ressort (16) et l'agencement à ressort auxiliaire (36), et en ce que de préférence la conicité et la pente des rainures de guidage (15, 18) du premier et du second galet d'organe de traction (12, 14) sont choisies, en tenant compte de la caractéristique élastique de l'agencement à ressort auxiliaire (36), de telle façon que l'on atteint la caractéristique constante désirée ou consciemment en gradins pour la force d'enroulement totale, et/ou en ce que l'agencement à ressort auxiliaire (36) assure 5 à 40% et en particulier environ 30% de la force d'enroulement totale.

9. Enrouleur selon l'une des revendications 1 à 4, caractérisé en ce que le verrouillage de déroulement (40) de ceinture est engagé en cas de rupture de l'organe de traction.

10. Enrouleur selon la revendication 9, caractérisé en ce qu'un détecteur de rupture (27) pour l'organe de traction est relié au verrouillage de déroulement de la ceinture (40) de la ceinture via une ligne de commande (37), afin de déclencher ledit verrouillage en cas de rupture de l'organe de traction.

11. Enrouleur selon l'une des revendications 1 à 4, et en particulier selon l'une des revendications 9 ou 10, caractérisé en ce qu'un tensionneur de ceinture (41) est agencé au niveau du galet à ceinture (11), lequel enroule brutalement le galet à ceinture (11) dans le cas d'une décélération du véhicule provoquée par un accident, au moins d'une valeur nécessaire pour le tensionnement de la ceinture, et en ce que le tensionneur de ceinture (41) est déclenché en cas de rupture de l'organe de traction.

12. Enrouleur selon la revendication 11, caractérisé en ce qu'un détecteur de rupture (27) pour l'organe de traction est relié au tensionneur de ceinture (41) via une ligne de commande (42) afin de déclencher ledit tensionneur en cas de rupture de l'organe de traction.

13. Enrouleur selon l'une des revendications 5 à 12, caractérisé en ce que le détecteur de rupture (27) pour l'organe de traction réagit directement à la présence ou à la tension de l'organe de traction (13), et le détecteur de rupture (27) comprend de préférence un palpeur d'organe de traction (27').

14. Enrouleur selon l'une des revendications 5 à 10, caractérisé en ce que détecteur de rupture (27) réagit à la vitesse de rotation du second galet d'organe de traction (14) par rapport au premier galet d'organe de traction (12).

15. Enrouleur selon l'une des revendications 1 à 4, caractérisé en ce que l'organe de traction est subdivisé en au moins deux organes de traction partiels (13a, 13b) qui s'étendent parallèlement l'un à l'autre.

16. Enrouleur selon l'une ou l'autre des revendications 5 et 6, caractérisé en ce que le détecteur de rupture (27) pour l'organe de traction est formé par un accouplement à force d'inertie (31'), lequel est relié en rotation au second galet d'organe de traction (14), et qui, en cas de détermination d'une rupture de l'organe de traction par augmentation soudaine de la vitesse de rotation du second galet d'organe de traction (14), accouple en mode d'entraînement le second galet d'organe de traction (14) avec le premier galet d'organe de traction (12) ou avec le galet à ceinture (11), de telle façon que le premier galet d'organe de traction (12), ou bien le galet à ceinture (11) est entraîné en rotation dans la direction d'enroulement de la ceinture, par le second galet d'organe de traction (14) entraîné par l'agencement à ressort (16).
